# EUROPEAN PATENT APPLICATION

(11) **EP 3 862 603 A1**
(43) Date of publication of application: **11.08.2021**
(21) Application number: 19842740.3
(22) Date of filing: 25.03.2019
(51) Int. Cl.: F16K 15/20, F16K 15/06

(54) **VALVE**

(71) Applicant: Pacific Industrial Co., Ltd., Ogaki-shi, Gifu 503-8603 (JP)
(72) Inventor: SUNAYAMA, Yuki, Ogaki-shi, Gifu, 503-8603 (JP)
(74) Representative: Kramer Barske Schmidtchen Patentanwälte PartG mbB
(86) International application number: PCT/JP2019/012608
(87) International publication number: WO 2020/194471

(57) **Abstract**

[Object] To reduce the number of components of a valve.

[Solving Means] The valve 10 includes a sleeve 20, a shaft 30 supported inside the sleeve 20 such as to be movable linearly and having one end positioned more forward than a first end face 21 of the sleeve, a valve body 60 extending sideways from one end of the shaft 30, an elastic member 40 surrounding the sleeve 20 and fixedly joined to an outer side face of the sleeve, a press-fit seal part 41 provided to the elastic member 40 and press-fit into a valve attachment hole 91 of a component 90 to which the valve is mounted to make a contact with an inner side face of the valve attachment hole 91, and a valve seat seal part 50 provided to the elastic member 40 and covering the first end face 21 of the sleeve 20, for the valve body 60 to make a contact with and separate from.

## Description

### TECHNICAL FIELD

The present disclosure relates to a valve.

### BACKGROUND ART

Valves that are press-fit in valve attachment holes formed in components to which the valves are mounted have been known before. Some of these valves have a tubular elastic member covering the outer circumferential surface of a valve stem that accommodates a valve core (see, for example, Patent Document 1).

### RELATED ART DOCUMENTS

### PATENT DOCUMENTS

Patent Document 1: Japanese Patent Application Publication No. JP 2016-55695 A (paragraph [0017] and Fig. 2)

### SUMMARY OF THE INVENTION

### PROBLEMS TO BE SOLVED BY THE INVENTION

A reduction in the number of components has been desired for the valve described above.

### SOLUTIONS TO PROBLEMS

The invention set forth in claim 1 made to solve the problem noted above resides in a valve including: a sleeve; a shaft supported inside the sleeve such as to be movable linearly and having one end positioned more forward than a first end face of the sleeve; a valve body extending sideways from the one end of the shaft; an elastic member surrounding the sleeve and fixedly joined to an outer side face of the sleeve; a press-fit seal part provided to the elastic member and press-fit into a valve attachment hole of a component to which the valve is mounted to make a contact with an inner side face of the valve attachment hole; and a valve seat seal part provided to the elastic member, covering the first end face of the sleeve, and contacting and separating from the valve body.

### BRIEF DESCRIPTION OF THE DRAWINGS

Fig. 1 is a cross-sectional side view of a valve according to a first embodiment of the present disclosure.
Fig. 2 is a cross-sectional side view of the valve when the valve body has reached an open state.
Fig. 3 is a cross-sectional side view of a valve according to a second embodiment.
Fig. 4 is an enlarged cross-sectional side view of the vicinity of the valve body in the valve.
Fig. 5(A) is a cross-sectional side view of a valve according to another embodiment, (B) is a cross-sectional side view of a valve according to another embodiment, and (C) is a cross-sectional side view of a valve according to another embodiment.
Fig. 6(A) is a cross-sectional side view of a valve according to another embodiment, (B) is a cross-sectional side view of a valve according to another embodiment, and (C) is a cross-sectional side view of a valve according to another embodiment.
Fig. 7(A) is a cross-sectional side view of a valve according to another embodiment, (B) is a cross-sectional side view of a valve according to another embodiment, and (C) is a cross-sectional side view of a valve according to another embodiment.
Fig. 8(A) is a cross-sectional side view of a valve according to another embodiment, (B) is a cross-sectional side view of a valve according to another embodiment, and (C) is a cross-sectional side view of a valve according to another embodiment.
Fig. 9(A) is a side view of a valve body according to another embodiment, (B) is a side view of a valve body according to another embodiment, (C) is a side view of a valve body according to another embodiment, and (D) is a cross-sectional side view of a valve body according to another embodiment.
Fig. 10(A) is a cross-sectional side view of a valve according to another embodiment, and (B) is a cross-sectional side view of a valve according to another embodiment.

### MODE FOR CARRYING OUT THE INVENTION

### [First embodiment]

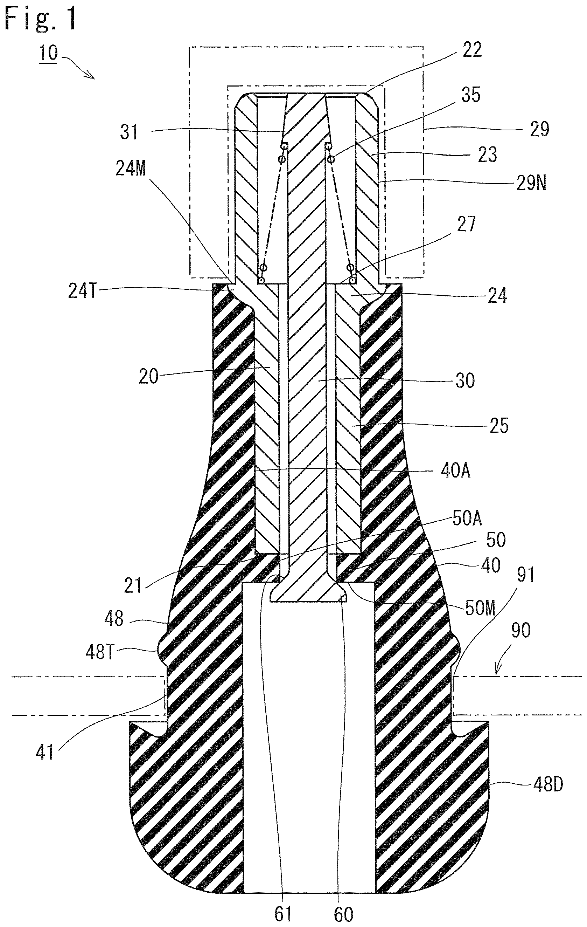

Fig. 1 shows a valve 10 of the first embodiment. The valve 10 of this embodiment is press-fit into a valve attachment hole 91 formed in a component 90 to which the valve is mounted (such as the rim of a tire wheel, for example). The valve 10 has a sleeve 20, a shaft 30 passing through the inside of the sleeve 20, and an elastic member 40 surrounding the sleeve 20.

The sleeve 20 has a flow passage inside for allowing a fluid to flow through. In this embodiment, the sleeve 20 is covered by the elastic member 40 from a midway point to one end, while the other end of the sleeve 20 is exposed from the elastic member 40. External threads 29N are formed on the outer circumferential surface of the exposed part. The valve 10 is provided with a cap 29 that is screwed on the external threads 29N. Hereinafter, one end side of the sleeve 20 of the valve 10 (lower side in Fig. 1) shall be referred to as the distal end side, and the other end side of the sleeve 20 (upper side in Fig. 1) as the proximal end side.

A proximal step surface 27 is formed on the inner side face in a proximal end part of the sleeve 20 by radially reducing a distal side portion stepwise. In this embodiment, the sleeve 20 has a large diameter part 23 on the proximal side, a small diameter part 25 on the distal side, and a step 24 that connects these parts. An annular protrusion 24T extends out radially from the step 24 of the sleeve 20.

The shaft 30 is supported such as to be movable linearly along the axial direction of the sleeve 20. The shaft 30 has an outside diameter that is slightly smaller than the inside diameter of the sleeve 20 so that there is a clearance between the shaft 30 and the sleeve 20 for allowing a fluid to flow through. The distal end part of the shaft 30 extends more forward (downward in Fig. 1) than a first end face 21 that is the distal end face of the sleeve 20 (i.e., the edge of the opening at the distal end of the sleeve 20) and extends out of the sleeve 20. A proximal end part of the shaft 30 is positioned closer to the proximal end of the sleeve 20 (upper side in Fig. 1) than the proximal step surface 27. A spring lock protrusion 31 extends sideways (radially outward) from the proximal end part of the shaft 30. More specifically, the spring lock protrusion 31 is tapered toward the proximal end.

The valve 10 of this embodiment is provided with a compression coil spring 35 set between the proximal step surface 27 of the sleeve 20 and the spring lock protrusion 31 of the shaft 30 in a loaded condition. The compression coil spring 35 is a tapered coil spring that reduces in diameter toward the proximal end. In this embodiment, the compression coil spring 35 supports the shaft 30 to be substantially coaxial with the sleeve 20. Alternatively, the sleeve 20 may be provided with protrusions projecting from a plurality of circumferential positions on the inner side face, and the shaft 30 may be supported by these protrusions.

The valve 10 of this embodiment has a valve body 60 extending out sideways from a distal end part of the shaft 30. More specifically, the valve body 60 extends out circumferentially from all around the shaft 30. The valve body 60 has a valve body proximal end face 61 facing the proximal side, which is a tapered surface reducing in diameter toward the proximal side. The largest-diameter part of the valve body 60 (distal end part of the valve body 60 in this embodiment) has a larger diameter than the inside diameter of the sleeve 20. The valve body 60 is biased against the first end face 21 of the sleeve 20 by the compression coil spring 35 (biased to be in the state shown in Fig. 1).

The elastic member 40 has a through hole 40A for the sleeve 20 to pass through, this through hole 40A and the outer side face of the sleeve 20 being fixedly joined. As mentioned above, the elastic member 40 is positioned closer to the distal side than the external threads 29N of the sleeve 20. In this embodiment, the proximal end face of the elastic member 40 is substantially flush with an annular proximal end face 24M of the annular protrusion 24T of the sleeve 20 facing the proximal side.

The elastic member 40 is provided with an extended tubular part 48 extending from the first end face 21 of the sleeve 20 away from the sleeve 20. The extended tubular part 48 laterally surrounds a moving range of the valve body 60. A flange part 48T bulges out in a flange shape from an axial midway point of the extended tubular part 48. A distal end large-diameter part 48D having a larger diameter than the flange part 48T is formed at the distal end part of the extended tubular part 48.

The elastic member 40 has a press-fit seal part 41 on an outer circumferential surface, which is press-fit into a valve attachment hole 91 of the component 90 to which the valve is mounted and makes a contact with an inner circumferential surface of the valve attachment hole 91. More specifically, the press-fit seal part 41 is a part of the extended tubular part 48 positioned between the flange part 48T and the distal end large-diameter part 48D in the axial direction of the sleeve 20. The elastic member 40 in this embodiment is shaped such that a distal end (of the extended tubular part 48) bulges out in the radial direction of the sleeve 20.

The elastic member 40 is provided with a valve seat seal part 50 that covers the first end face 21 of the sleeve 20. More specifically, the valve seat seal part 50 protrudes inward from an inner circumferential surface of the through hole 40A of the elastic member 40 between the first end face 21 of the sleeve 20 and the valve body 60 in the axial direction of the sleeve 20. More specifically, the valve seat seal part 50 is an annular protrusion projecting inward from the inner circumferential surface of the through hole 40A of the elastic member 40 circumferentially all around and fixedly attached to the first end face 21 of the sleeve 20. The valve seat seal part 50 has an inside diameter that is substantially the same as the inside diameter of the sleeve 20 and smaller than the largest diameter of the valve body 60. In this embodiment, the distal end face 50M of the valve seat seal part 50 facing the distal side is substantially orthogonal to the axial direction of the sleeve 20. In this embodiment, part of the through hole 40A of the elastic member 40 from the valve seat seal part 50 to the distal end (lower part in Fig. 1) has such a diameter that there is a radial clearance for the valve body 60.

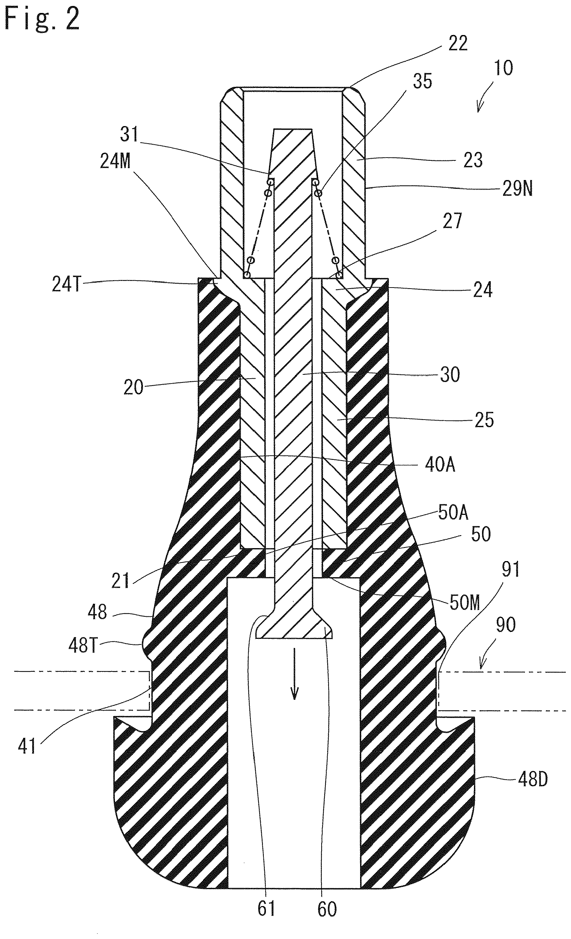

As mentioned above, the valve body 60 is biased against the first end face 21 of the sleeve 20 by the compression coil spring 35. Therefore, the valve body 60 is normally biased to be in tight contact with the valve seat seal part 50 (closed state) as shown in Fig. 1. When the cap 29 is removed from the valve 10 and the shaft 30 is pressed from the proximal end, the valve body 60 moves forward and separates from the valve seat seal part 50 (valve body 60 opens) as shown in Fig. 2, so that a fluid flowing into the valve 10 from the proximal end of the sleeve 20 can flow through between the sleeve 20 and valve seat seal part 50 and the shaft 30 and out from the distal end of the valve 10. Namely, the passage hole 50A of the valve seat seal part 50 through which the shaft 30 extends is the valve opening that is opened and closed by the valve body 60 in this embodiment.

The valve 10 of this embodiment is produced as follows. The sleeve 20 (e.g., made of metal) is set in a mold as an insert, and the material of the elastic member 40 (e.g., a thermosetting elastomeric material) is poured into the mold. This material is reacted (vulcanized) inside the mold to form the elastic member 40 fixedly joined to the sleeve 20. After that, the sleeve 20 and the elastic member 40 are removed from the mold, and the compression coil spring 35 and the shaft 30 are attached to the sleeve 20. The valve 10 is thus completed.

The structure of the valve 10 and the method of producing the valve 10 of this embodiment are as described above. The proximal end face 22 of the sleeve 20 in this embodiment is referred to as a "second end face" in the claims. The proximal step surface 27 is referred to as a "second step surface" in the claims.

The valve 10 of this embodiment is provided with the press-fit seal part 41 that is press-fit into a valve attachment hole 91 of the component 90 to which the valve is mounted and makes a contact with an inner side surface of the valve attachment hole 91. The valve 10 is also provided with the valve seat seal part 50 that makes a contact with the valve body 60. If the press-fit seal part 41 and the valve seat seal part 50 were provided to separate components, the number of components of the valve would increase and so would the number of assembling steps. In the valve 10 of this embodiment, the press-fit seal part 41 that forms a seal between the valve 10 and the inner side face of the valve attachment hole 91, and the valve seat seal part 50 that forms a seal between the sleeve 20 and the valve body 60, are both provided to the single elastic member 40. Thus, the number of components of the valve 10 can be reduced, which enables a reduction in the number of assembling steps of the valve 10. Moreover, the valve opening that is opened and closed by the valve body 60 is provided in the valve seat seal part 50 that covers the first end face 21 of the sleeve 20. It is thus possible to reduce the number of components of the valve 10 as compared to conventional valves that have a valve core inside the sleeve 20, and the number of assembling steps of the valve 10 can also be reduced.

### [Second embodiment]

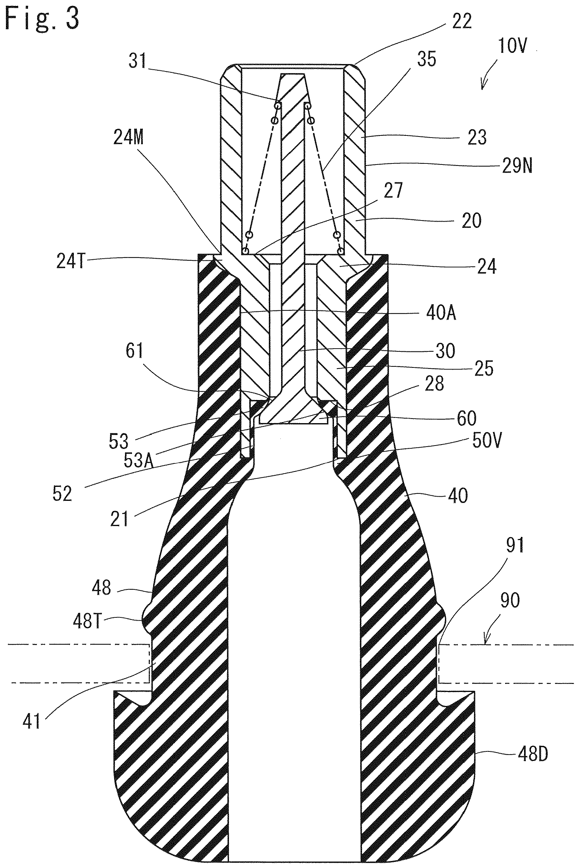

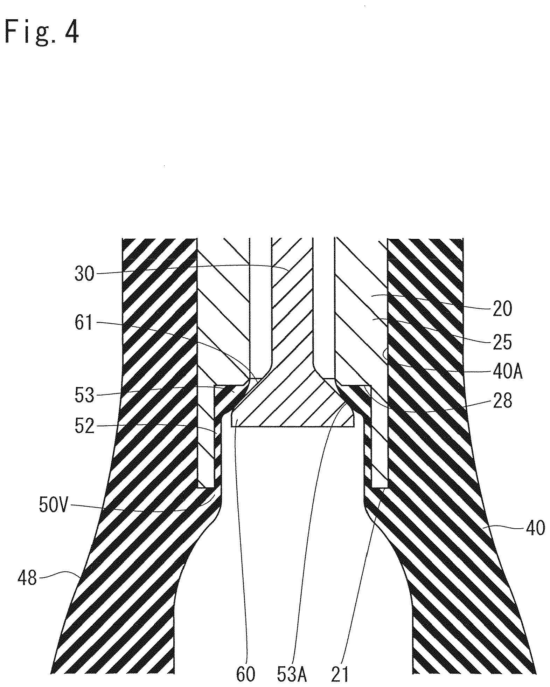

The valve 10V of this embodiment is different from the first embodiment described in the foregoing in the structures of the sleeve 20V and the valve seat seal part 50V. As shown in Fig. 3 and Fig. 4, a distal step surface 28 is formed on the inner side face in a distal end part of the sleeve 20V in this embodiment by radially reducing a proximal side portion stepwise. The valve seat seal part 50V is provided with an inner face cover part 52 that covers the inner side face of the sleeve 20 from the first end face 21 to the distal step surface 28, and a step surface cover part 53 that covers the distal step surface 28. In this embodiment, the valve body 60 makes a contact with the step surface cover part 53 of the valve seat seal part 50V by the biasing force of the compression coil spring 35. In this embodiment, the passage hole 53A of the step surface cover part 53 through which the shaft 30 passes serves as the valve opening that is opened and closed by the valve body 60. The distal end face of the step surface cover part 53 facing the distal side in this embodiment (i.e., the contact surface that makes a contact with the valve body 60) is gradually increased in diameter toward the distal end so that it can readily make a contact with the tapered valve body proximal end face 61 of the valve body 60. Other features of the valve 10V in this embodiment are the same as those of the valve 10 of the first embodiment described in the foregoing. The distal step surface 28 in this embodiment is referred to as a "first step surface" in the claims.

The valve 10V of this embodiment can provide similar effects as those of the previously described valve 10 of the first embodiment. Moreover, in this embodiment, the step surface cover part 53 of the valve seat seal part 50V to contact the valve body 60 is provided inside the sleeve 20. Therefore, the passage hole 53A of the valve seat seal part 50V does not become smaller by the pressure when the elastic member 40 is press-fit into the valve attachment hole 91 of the component 90 to which the valve is mounted. This minimizes the possibility of the valve seat seal part 50V causing a resistance to linear sliding movement of the shaft 30, as well as prevents a situation where the fluid can hardly flow through between the shaft 30 and the valve seat seal part 50V when the valve body 60 separates from the valve seat seal part 50V (when it opens).

### [Other embodiments]

(1) The component 90 to which the valve 10 is mounted may be a pipe or the like, for example.

(2) While the part of the valve 10 that provides a seal between the valve and the inner side face of the valve attachment hole 91 of the component 90 to which the valve is mounted (i.e., the press-fit seal part 41) is positioned more forward than the first end face 21 of the sleeve 20 (i.e., on the extended tubular part 48) in the embodiment described above, this part may be positioned closer to the proximal side than the first end face 21 of the sleeve 20.

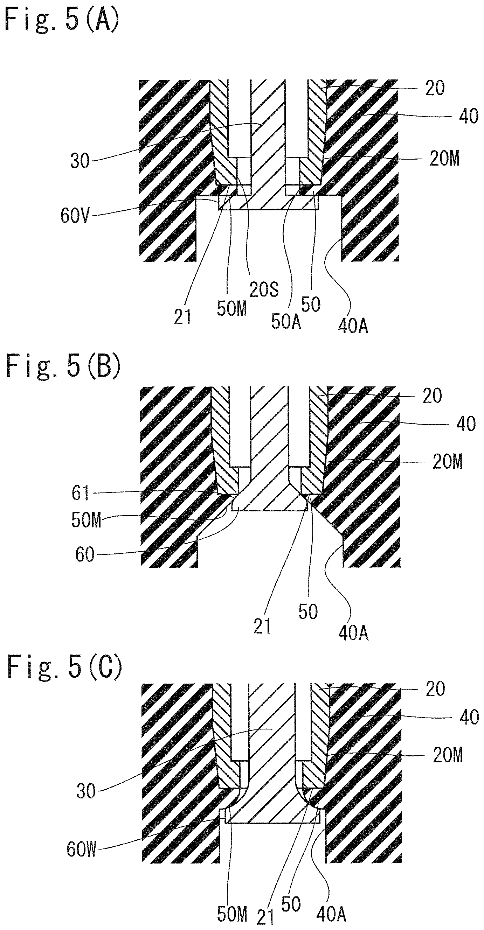

(3) The sleeve 20 may have a distal end part with a tapered surface 20M where the outer side face is reduced in diameter toward the distal end as shown in Fig. 5(A). Also, the sleeve 20 may be provided with a reduced-diameter part 20S on the inner face at the distal end part where the diameter is reduced (e.g., stepwise) at the distal end as shown in the drawing.

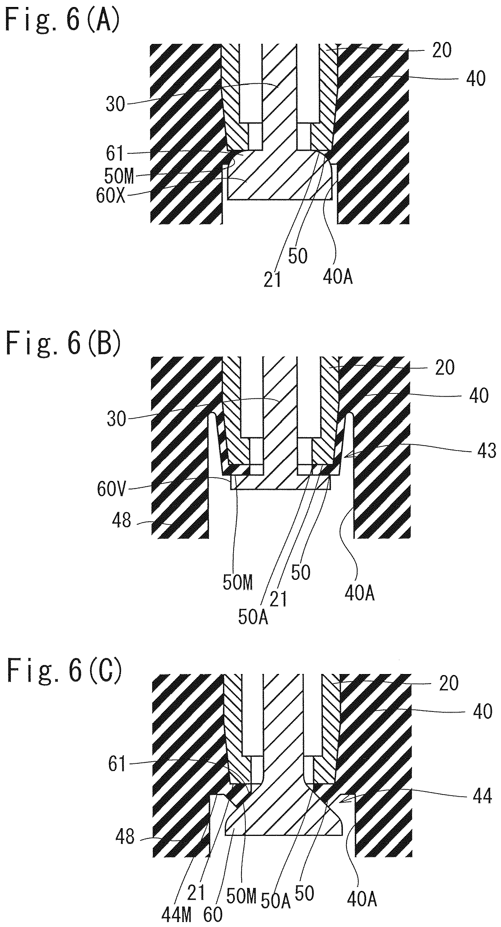

(4) The distal end face 50M of the valve seat seal part 50 of the elastic member 40 may be formed such as to gradually increase in diameter toward the distal end as shown in Fig. 5(B), Fig. 5(C), and Fig. 6(A). If this is the case, the distal end face 50M may be a tapered surface, for example, (see Fig. 5(B)), or a bulged surface protruding inward of the through hole 40A (see Fig. 5(C)), or a concave surface (see Fig. 6(A)).

(5) The elastic member 40 may be formed with an annular groove 43 that surrounds a distal end part of the sleeve 20 (an end part near the first end face 21) as shown in Fig. 6(B). In the illustrated example, the annular groove 43 is open in the distal end face 50M of the valve seat seal part 50. With this structure, the annular groove 43 is provided between the valve seat seal part 50 covering the first end face 21 of the sleeve 20 and the press-fit seal part 41 of the elastic member 40 (see Fig. 1), so that, even when the press-fit seal part 41 is pressed from outside in the radial direction of the sleeve 20, the valve seat seal part 50 is hardly subjected to the force from radially outside, and the passage hole 50A of the valve seat seal part 50 is prevented from becoming smaller. This minimizes the possibility of the valve seat seal part 50 causing a resistance to linear sliding movement of the shaft 30, as well as prevents a situation where the fluid can hardly flow through between the shaft 30 and the valve seat seal part 50V when the valve body 60 separates from the valve seat seal part 50 (when it opens).

(6) The distal end face 50M of the valve seat seal part 50 facing the distal side of the elastic member 40 may be formed with an annular recess 44 as shown in Fig. 6(C). More specifically, the annular recess 44 is positioned radially outside the sleeve 20, and the bottom surface 44M of the annular recess 44 is positioned more forward than the first end face 21 of the sleeve 20. In the illustrated example, the distal end face 50M of the valve seat seal part 50 has a tapered surface that is reduced in diameter toward the proximal end radially inside the annular recess 44, and this tapered surface makes a contact with the valve body 60 in the closed state.

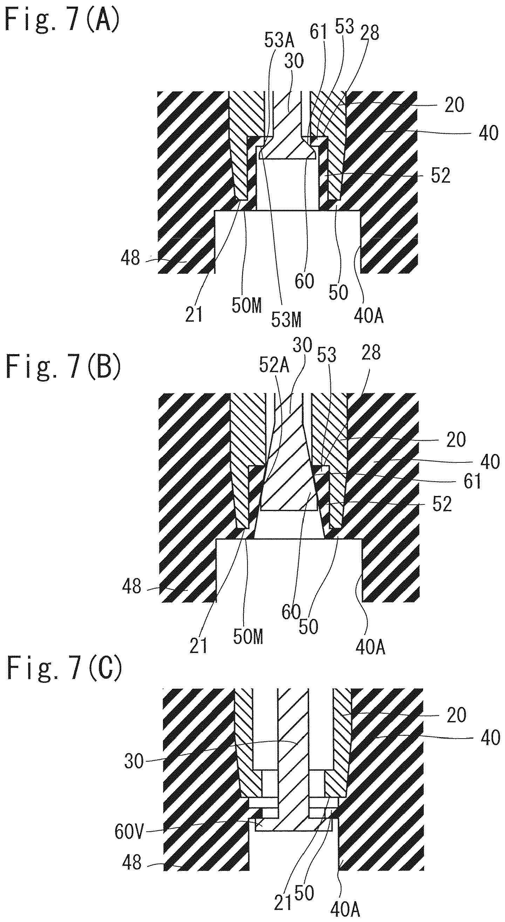

(7) As shown in Fig. 7(A), the distal end face of the step surface cover part 53, i.e., the contact surface 53M that makes a contact with the valve body 60, may be substantially perpendicular to the axial direction of the sleeve 20.

(8) As shown in Fig. 7(B), the inner circumferential surface 52A of the inner face cover part 52 of the valve seat seal part 50 may be a tapered surface that is reduced in diameter toward the proximal end. If this is the case, the inner circumferential surface 52A of the inner face cover part 52 serves as the valve opening that is opened and closed by the valve body 60.

(9) As shown in Fig. 7(C), there may be a clearance between the first end face 21 of the sleeve 20 and the valve seat seal part 50.

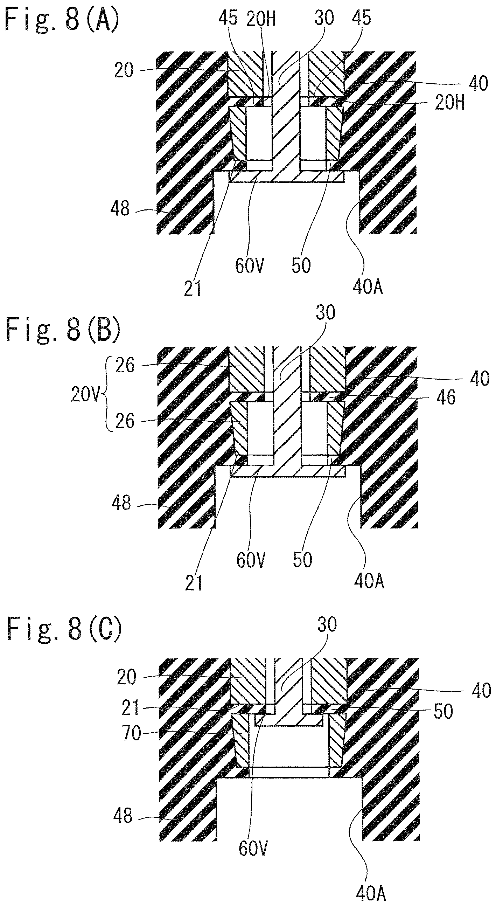

(10) As shown in Fig. 8(A), the sleeve 20 may be formed with a sleeve through hole 20H extending between inside and outside of the sleeve 20. If this is the case, the elastic member 40 may be provided with an inner extended part 45 extending from an inner face of the through hole 40A of the elastic member 40 through the sleeve through hole 20H inward of the sleeve 20. There may be one through hole 20H, or a plurality of through holes. In the example of Fig. 8(A), the sleeve 20 has two through holes 20H positioned radially opposite each other.

(11) As shown in Fig. 8(B), the sleeve 20V may be made up of a plurality of axially arranged tubular members 26. If this is the case, the distal end face of one of the plurality of tubular members 26 that is positioned at the most distal end serves as the first end face 21. The elastic member 40 in this case may include an annular extension 46 on the inner face of the through hole 40A held between the plurality of tubular members 26.

(12) As shown in Fig. 8(C), a tubular member 70 surrounding the valve body 60V may be fixed to the inner face of the through hole 40A of the elastic member 40 in a part closer to the distal end than the sleeve 20. In the illustrated example, the tubular member 70 is disposed coaxial with the sleeve 20 and has a larger inside diameter than the inside diameter of the sleeve 20 so that there is a clearance between the tubular member 70 and the valve body 60V for allowing the fluid pass through. The valve seat seal part 50 protrudes from the inner face of the through hole 40A of the elastic member 40 to between the sleeve 20 and the tubular member 70. With this structure wherein the tubular member 70 is provided, the through hole A of the elastic member 40 does not become smaller by the pressure when the elastic member 40 is press-fit into the valve attachment hole 91. Since this prevents the clearance between the inner face of the through hole 40A of the elastic member 40 and the valve body 60V from becoming smaller, it is unlikely that the fluid can hardly flow through when the valve body 60V is in the open state.

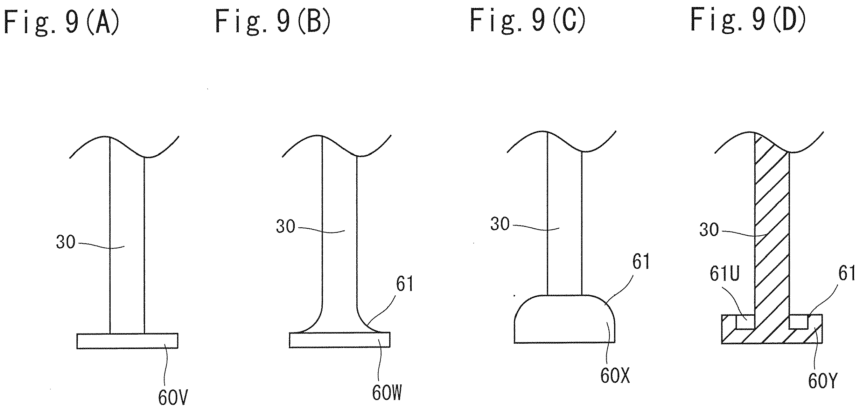

(13) The valve body may have any of the shapes shown in Fig. 9. As shown in Fig. 9(A), the valve body 60V may have a disc-like shape substantially orthogonal to the shaft 30. If this is the case, an annular groove 61U surrounding the shaft 30 may be formed in the valve body proximal end face 61 as in the valve body 60Y shown in Fig. 9(D). These valve body 60V and valve body 60Y are suitable for the structure of Fig. 5(A) and the like. The valve body proximal end face 61 may have a shape gradually reducing in diameter toward the proximal end. If this is the case, the valve body proximal end face 61 may have a concave surface as in the valve body 60W shown in Fig. 9(B), or a bulged surface as shown in Fig. 9(C). The former valve body 60W is suitable for the structure of Fig. 5(C) and the like, while the latter valve body 60X is suitable for the structure of Fig. 6(A) and the like.

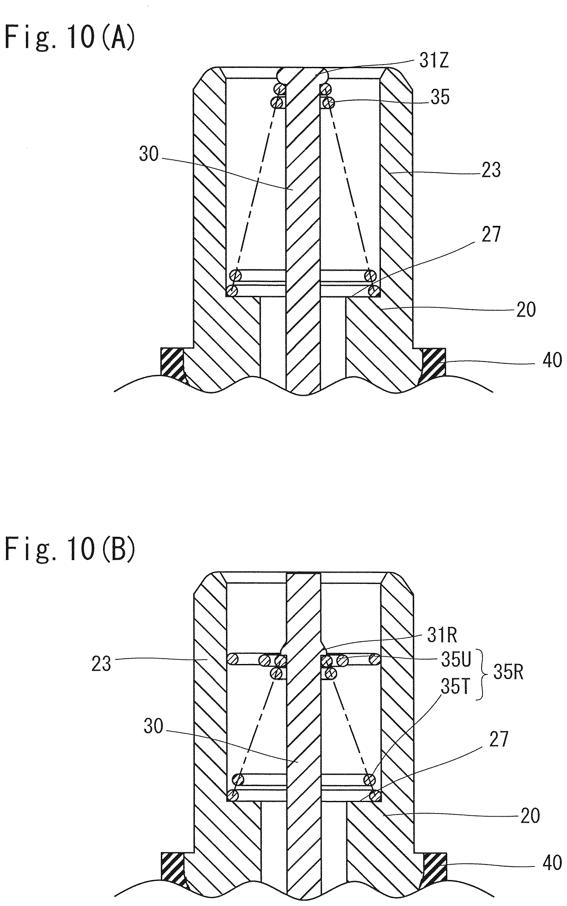

(14) As shown in Fig. 10(A), the spring lock protrusion 31Z of the shaft 30 may be bulged radially outward of the shaft 30.

(15) As shown in Fig. 10(B), the spring lock protrusion 31R may be provided at a midway point of the shaft 30 as long as it is closer to the proximal end than the proximal step surface 27 of the sleeve 20.

(16) As shown in Fig. 10(B), the compression coil spring 35R may be made up of a tapered part 35T reduced in diameter toward the proximal end, and a spiral part 35U winding in a spiral from the proximal end of the tapered part 35T outward in the radial direction of the sleeve 20.

### DESCRIPTION OF THE REFERENCE NUMERAL

- 10: Valve
- 20: Sleeve
- 30: Shaft
- 40: Elastic member
- 41: Press-fit seal part
- 50: Valve seat seal part

## Claims

1. A valve comprising:
a sleeve;
a shaft supported inside the sleeve such as to be movable linearly and having one end positioned more forward than a first end face of the sleeve;
a valve body extending sideways from the one end of the shaft;
an elastic member surrounding the sleeve and fixedly joined to an outer side face of the sleeve;
a press-fit seal part provided to the elastic member and press-fit into a valve attachment hole of a component to which the valve is mounted to make a contact with an inner side face of the valve attachment hole; and
a valve seat seal part provided to the elastic member, covering the first end face of the sleeve, and contacting and separating from the valve body.

2. The valve according to claim 1, wherein the elastic member is provided with an annular groove that surrounds an end part of the sleeve near the first end face.

3. The valve according to claim 1 or 2, wherein
the sleeve includes a first step surface inside an end part near the first end face, formed by stepwisely radially reducing a part away from the first end face;
the valve seat seal part includes an inner face cover part covering an inner side face of the sleeve from the first end face to the first step surface, and a step surface cover part covering the first step surface; and
the valve body makes a contact with and separates from the step surface cover part.

4. The valve according to any one of claims 1 to 3, wherein
the sleeve includes a second step surface inside a part near a second end face opposite from the first end face, formed by stepwisely radially reducing a part closer to the first end face;
the shaft includes a spring lock protrusion extending sideways from an end part opposite from the valve body; and
a compression coil spring is set between the spring lock protrusion and the second step surface in a loaded condition.

5. The valve according to claim 4, wherein the compression coil spring is a tapered coil spring.

6. The valve according to any one of claims 1 to 5,
wherein an end part of the sleeve near a second end face opposite from the first end face is exposed from the elastic member, with a threaded part formed on an outer side face of the exposed part,
the valve further comprises a cap that is screwed on the threaded part.

7. The valve according to any one of claims 1 to 6, wherein the elastic member includes an extended tubular part that extends from the first end face away from the sleeve and laterally surrounds a moving range of the valve body.

8. The valve according to claim 7, wherein the press-fit seal part is provided to the extended tubular part.
